Europäisches Patentamt

European Patent Office

Office européen des brevets

(11) Publication number: **0 445 369 B1**

# EUROPEAN PATENT SPECIFICATION

(45) Date of publication of patent specification: **29.03.95**

(51) Int. Cl.⁶: **A23P 1/08**, //A23L1/317, A23L1/325,A21D13/00

(21) Application number: **90121908.9**

(22) Date of filing: **15.11.90**

(54) **Use of oil absorption reducing material for food cooked with fats and oils.**

(30) Priority: **08.03.90 JP 57289/90**

(43) Date of publication of application:
**11.09.91 Bulletin 91/37**

(45) Publication of the grant of the patent:
**29.03.95 Bulletin 95/13**

(84) Designated Contracting States:
**CH DE ES FR GB IT LI NL SE**

(56) References cited:
**EP-A- 0 285 196**
**US-A- 4 897 275**

**WORLD PATENTS INDEX LATEST Section Ch,
1988 DerwentPublications Ltd., London, GB;
Class D, AN 86-303195 (46) &JP-B-61 047 499
(KAKIGAWA) 20 October 1986**

**WORLD PATENTS INDEX LATEST Section Ch,
1983 DerwentPublications Ltd., London, GB;
Class D, AN 83-835273 (49) &JP-A-58 183 069
(HIGASHIMURA TOKUTAR) 26 October 1983**

(73) Proprietor: **Seiwa Technological Laboratories, Limited
4-19-10 Azusawa
Itabashi-ku
Tokyo (JP)**

(72) Inventor: **Fukazawa, Ryutaro, c/o Seiwa Technological Lab.Ltd
4-19-10, Azusawa, Itabashi-ku
Tokyo (JP)**
Inventor: **Okino, Hitomi, c/o Seiwa Technological Lab. Ltd.
4-19-10, Azusawa, Itabashi-ku
Tokyo (JP)**

(74) Representative: **Kraus, Walter, Dr. et al
Patentanwälte Kraus, Weisert & Partner
Thomas-Wimmer-Ring 15
D-80539 München (DE)**

WORLD PATENTS INDEX LATEST Section Ch, 1985 DerwentPublications Ltd., London, GB; Class D, AN 85-267218 (43) &JP-A-60 180 562 (OKANURA KASEI) 14 September 1985

WORLD PATENTS INDEX LATEST Section Ch, 1986 DerwentPublications Ltd., London, GB; Class D, AN 86-202249 (31) &JP-A-61 135 547 (OSHIO) 23 June 1986

**Description**

This invention relates to the use of a material for reducing oil absorption in food cooked with fats and oils. It also relates to a method of reducing oil absorption in food for the purpose of preventing food from absorbing fats and oils in a large quantity when the food is cooked with fats and oils. The present invention is a technique that can be widely used in the food industries recently having a general tendency toward a low calorie.

Some publications disclose methods in which, though not carried out in daily life, food is fried and thereafter centrifuged to reduce oil content or subjected to solvent extraction in special instances. Such techniques cannot be utilized in an industrial scale. It is also reported that oil absorption can be reduced when gluconodeltalactone, gluconic acid or the like is previously mixed into food. According to what was confirmed by the present inventors, however, the oil absorption was at a rate almost out of question.

There are very many kinds of food cooked with fats and oils, including tempra (Japanese deep-fried food) and fried food, and also side dishes such as all sorts of daily dishes, frozen food and kamaboko - (boiled fish paste), as well as cake, bread and snacks. These are also of great quantity. Edible fats and oils are important for food in view of physical energy and also in view of the improvement of taste. In recent years, however, particularly in advanced countries, food has become so abundant or rich that there is a tendency toward a low calorie form the viewpoint of adult diseases. As well known, proteins and carbohydrates among the three component factors of food, i.e., proteins, lipids and carbohydrates, each have an energy of 4 kcal per gram. On the other hand, fats and oils have an energy of as high as 9 kcal per gram, which is twice or more. Hence, an excessive ingestion of fats and oils may result in an excessively high calorie to bring about an undesirable situation of health caused by corpulence. Statistics show that such an undesirable situation increases as Japanese-style food, which had been originally relatively low in calorie and well balanced in nutrition, has changed to food of high calorie because of its westernization after the war.

WPIL 86-303195 (46) relates to boiled fish food which includes immersing raw fish meat in a flavouring liquid, freezing and boiling. Raw fish meat is immersed in flavouring liquid containing common salt to extract proteins, e.g. actin and myosin, and form an actomyosin film on the surface of the meat before being frozen and boiled.

WPIL 85-267218 (43) relates to the preparation of a water insoluble edible thin film which comprises spreading fish meat powder showing fresh meat activity on the surface of a substance, contacting it with water or an aqueous salt solution and stand-maturing it.

WPIL 83-835273 (49) relates to a fish roe-jelly fish composite product which is obtained by first kneading a mixture of salt, neutral polyphosphate, active actomyosin and fish roe.

The present inventors had an idea on whether or not it is impossible to control an excessive ingestion of fats and oils while taking full account of the value of fats and oils as physical energy and the importance in daily life on the food cooked with fats and oils. This was the starting point of the present invention.

To give an example on deep-fried food, which is a typical example of the food cooked with fats and oils, a food material is put, as it is or after it has been covered with a coating mixture, in fats and oils heated to 100°C or more in general, so that water content in the food material is evaporated and instead the fats and oils penetrate into the food material (including the coating). The oil absorption refers to the percentage (%) obtained by dividing the quantity of fats and oils thus absorbed in the food material by the weight of the food material. Since the fats and oils are also contained in the food material, the quantity of fats and oils in the food material is subtracted from the total quantity of fats and oils in quantitative determination, and the resulting value is regarded as the oil absorption. Of course, the oil absorption differs depending on the kinds of food. Even in the same food, however, the oil absorption becomes higher when it is cut in smaller size. The oil absorption also differs depending on whether a food material is coated or not coated, and other various factors such as the quality of coating, the time for which a food material is deep-fried and the temperature at which a frying oil is maintained. Several examples of the oil absorption are as follows: Deep-fried prawns, about 10 %; potatoes (cut into square rods) deep-fried without coat, about 4 %; potatoes (cut into thin strips) deep-fried without coat, about 19 %; doughnuts, about 15 %; deep-fried oysters, about 20 %; etc.

For the present inventors, it was a first problem to discover a material that makes it possible to treat food with a film material through which water vapor passes and permeates into a food having been not cooked with fats and oils but through which fats and oils do not pass when the food is cooked with fats and oils, and yet gives no foreign feeling in taste. It was a second problem to discover a film having a sufficient extensibility, since the food cooked with fats and oils often swells or undergoes transformation in the course of frying, as in the case of doughnuts.

3

The present inventors made a great number of studies on thermally solidifying films which are formed on the outer surface of food to be cooked with fats and oils, through which fats and oils do not pass and water vapor passes, and which have extensibility and yet give no foreign feeling in taste. In particular, they repeated experiments on various proteins and polysaccharides. As a result, they found that the use of a gel of an actomyosin protein present in animal muscle and a dilute solution of the gel are most suited for that purpose. They have thus accomplished the present invention.

The present invention provides the use of an actomyosin gel obtained by dissolving in a salt solution an actomyosin protein of animal muscle, or of a powdered actomyosin obtained by forming said actomyosin gel into dry powder as an oil absorption reducing material for food cooked with fats and oils.

The present invention also provides a method of reducing oil absorption in food cooked with fats and oils, comprising applying to the surface of food to be cooked with fats and oils an actomyosin powder or an aqueous solution of the powder which is obtained by dissolving in a salt solution an actomyosin protein of animal muscle and by further drying the thus obtained actomyosin gel into a powder.

According to the method of the present invention, the actomyosin powder or the actomyosin gel or a dilute solution thereof, originating from the animal muscle is adhered to the surface of food to be cooked with fats and oils, in such a way that the former is directly applied to the latter or mixed in coating, and thereafter the food is deep-fried, pan-fried or baked. The oil absorption of the food thus cooked can thereby be reduced.

As well known in the art, proteins in animal muscle are comprised of regulatory protein or skeletal protein and contractile protein. The contractile protein comprises 80 % of muscle protein, and is comprised of actin and myosin. The actin and myosin combine to form actomyosin as a result of rigor mortis. The actomyosin is salt-soluble protein, and dissolves in water in which salt has been dissolved, to turn into a gel. It, however, does not dissolve in pure water. In order to obtain actomyosin fractions of animal muscle, muscles containing less fats and oils are used. After the muscles are minced, they are bleached many times. After removal of water-soluble proteins and others, the muscles thus treated are subjected to centrifugal hydro-extraction. Crude fractions of actomyosin can be thus obtained. In the present invention, the actomyosin obtained through this operation can be used to sufficiently achieve its objects. Starting materials may be of any kinds, including meat or fish. In the case of fish or fish meat, the materials for actomyosin fractions are available through a daily route as raw fish meat paste (mainly of Alaska pollack, Theragra chalcogrammus).

The actomyosin obtained by the above method does not dissolve in water, but dissolves in an aqueous 2.5 % to 3.0 % sodium chloride solution or an aqueous 4 % to 4.5 % potassium chloride solution to form a gel. An actomyosin gel can be solidified by heating, and, when formed into a thin film, gives a rubbery extensible film upon heating in fats and oils. When the gel of actomyosin is further diluted with a salt solution or water so as to be in the state of a sol in appearance, a film which is very thin and rich in extensibility can also be formed on the surface of an article upon heating in fats and oils in the state the sol is adhered to the surface of the article. This film is a film through which water vapor passes and liquid water or fats and oils do not pass. According to an organoleptic test, the film was confirmed to be tastless and odorless, and have no foreign feeling in texture when bread or hanpen (floated-type boiled fishpaste) was wrapped with it and eaten.

When a doughnut, having been shaped using a mold, is deep-fried after this actomyosin gel or a dilute solution thereof is adhered, the oil absorbed in the doughnut can be reduced substantially by half. When a dilute solution of actomyosin gel is used in place of water for dissolving wheat flour used for coating of tempura, the oil absorbed in tempura (including the coating) can be remarkably decreased.

The same effect can be obtained also in the case of a powder obtained by drying the actomyosin gel under reduced pressure at a low temperature, or a solution thereof. The same effect can be seen also when food is pan-fried or baked with fats and oils.

The present invention will be described below in detail by giving reference examples and working examples. The present invention is by no means limited by these.

Reference Example 1
Preparation examples of chicken actomyosin gel, dilute solution and powder:

After 500 g of the breast meat of a chicken was skinned, the meat was minced using a mincer. The mince thus obtained was put in 10 lit. of city water cooled to 5°C and then was thoroughly stirred. After the meat was settled, the supernatant was thrown away. This operation was repeated ten times until the supernatant became almost transparent. Thereafter the supernatant was thrown away. The meat was taken out and put in a cotton bag, followed by centrifugal hydro-extraction at 1,500 rpm for 10 minutes. The meat was weighed to find that it had a weight of 370 g.

To this meat, 11 g of sodium chloride was added, followed by cutting for 20 minutes using a silent cutter. As a result, actomyosin was completely gelled in the state of a paste. Of the resulting product, 100 g of the gel was taken in a container, and then stored in a refrigerator kept at 2°C. This was designated as Sample (A). Of the remaining product, 100 g of the gel was put in a crusher, and 500 ml of an aqueous 3 % sodium chloride solution was added thereto little by little with crushing until the sol was sufficiently dissolved. The resulting solution was taken in a container, and stored in a refrigerator kept at 2°C. This was designated as Sample (B). Of the remaining product, 100 g of the gel was spread over a tray, and the tray holding the actomyosin gel was put in a descicator containing phosphorus pentoxide, which was then put in a refrigerator kept at 5°C, to carry out drying under reduced pressure using a vacuum pump. 22.8 g of the solid material thus obtained was powdered in a mortar. The resulting powder was taken in a container and stored in a refrigerator kept at 2°C. This was designated as Sample (C).

Reference Example 2 Preparation example of Alaska pollack meat paste gel and dilute solution thereof:

500 g of frozen Alaska pollack meat paste (SA class, available from Taiyo Fishery Co., Ltd.) was thawed. For the purpose of deodorizing, the thawed meat was put in 10 lit. of cold water in which 0.2 % of Pinfish (available from Sankyo Foods Co.; a defatting, blood-removing and deodorizing food additive containing a lipase), followed by thorough stirring. After the meat was settled, the supernatant was thrown away. This operation was repeated three times, and thereafter the supernatant was thrown away. The meat was taken out and then put in a cotton bag, followed by centrifugal hydro-extraction at 1,500 rpm for 10 minutes. The meat was weighed to find that it had a weight of 420 g.

To the resulting Alaska pollack actomyosin, 18.9 g of potassium chloride was added, followed by cutting for 20 minutes using a silent cutter. As a result, actomyosin was completely gelled in the state of a paste. Of the resulting product, 100 g of the gel was taken in a container, and then stored in a refrigerator kept at 2°C. This was designated as Sample (D). Of the remaining product, 100 g of the gel was put in a crusher, and 1 lit. of an aqueous 4.5 % potassium chloride solution was added thereto little by little with crushing until the sol was sufficiently dissolved. The resulting solution was taken in a container, and stored in a refrigerator kept at 2°C. This was designated as Sample (E). Of the remaining product, 100 g of the gel was taken and put in a crusher, and 300 ml of water was added thereto little by little with stirring until the sol was sufficiently dissolved. The resulting solution was taken in a container, and stored in a refrigerator kept at 2°C. This was designated as Sample (F).

Example 1 Preparation examples of low-oil doughnuts:

To 500 g of a commercially available doughnut mix (a product of Morinaga & Co., Ltd.), 75 g of water and 70 g of an egg were added to prepare a doughnut base material. This doughnut base material was shaped using a mold to prepare 14 doughnuts of 40 g each. These were grouped for every two pieces, and treated as follows.

Treatment-(A) group:

The gel obtained in Reference Example 1 was thinly applied to a gauze. Each doughnut was completely wrapped with this gauze, and the gauze was slightly pressed against the doughnut. Thereafter, the gauze was removed.

Treatment-(B) group:

Each doughnut was quickly passed under the solution obtained in Reference Example 1, and then drained on a net.

Treatment-(C) group:

The powder obtained in Reference Example 1 was weighed by 10 g, and then dissolved in 230 ml of an aqueous 3 % sodium chloride solution. Each doughnut was quickly passed under the solution, and then drained on a net.

Treatment-(D) group:

The gel obtained in Reference Example 2 was thinly applied to a gauze. Each doughnut was completely wrapped with this gauze, and the gauze was slightly pressed against the doughnut. Thereafter, the gauze was removed.

Treatment-(E) group:

Each doughnut was quickly passed under the solution obtained in Reference Example 2, and then drained on a net.

Treatment-(F) group:

The powder obtained in Reference Example 2 was quickly passed under the dispersion obtained in Reference Example 2, and thereafter placed on a net. Excess liquid was removed with a rubber apatula.

Treatment-(G) group: Control.

The doughnuts of the above each group were previously deep-fried for just 2 minutes in salad oil heated to 160°C, and then the oil was dripped off. After the doughnuts were left to cool, the oil content in the whole of a doughnut was determined by the Soxhlet extraction method, and the quantity of fats and oils in the base material is subtracted therefrom to calculate the oil absorption. Results obtained are as shown in Table 1. In the course of deep-frying, doughnuts were synchronously rotated once.

Doughnuts prepared in entirely the same manner were organoleptically blank-tested by five panelists to reveal that no foreign feeling was recognized at all in appearance, taste, smell and texture.

Example 2
Preparation examples of low-oil deep-fried prawns:

Nine prawns on the market were purchased, and pretreated according to a conventional method. Thereafter, these were treated as follows:

Treatment-(C) group:

The water for coating liquid, which was to be used by dissolving wheat flour in it according to a conventional method, was replaced with a solution obtained by dissolving 10 g of the powder of Sample (C) in 230 ml of an aqueous 3 % sodium chloride solution. The solution as adhered to prawns and then deep-fried with oil.

Treatment-(E) group:

The water for coating liquid, which was to be used by dissolving wheat flour in it according to a conventional method, was replaced with the solution of Sample (E).

Treatment-(G) group: Control. The water was used in coating liquid, which was to be used by dissolving wheat flour in it according to a conventional method.

Three prawns for each of the above three groups were previously deep-fried for just 2 minutes in soybean pure oil heated to 160°C, and then the oil was dripped off. After the deep-fried prawns were left to cool, the oil content in the whole of a deep-fried prawn was determined by the Soxhlet extraction method to calculate the oil absorption. Results obtained are as shown in Table 2. In the course of deep-frying, prawns were synchronously rotated three times.

Deep-fried prawns prepared in entirely the same manner were organoleptically blank-tested by five panelists to reveal that no foreign feeling was recognized at all in appearance, taste, smell and texture.

Example 3
Preparation examples of low-oil hamburgers:

Imported milk cow lean was purchased on the market, and minced using a mincer. The minced meat was seasoned with salt and spices, and 50 g each of 6 lumps of meat were molded in the shape of hamburgers. The content of fats and oils of the said milk cow minced meat was previously determined by the Soxhlet extraction method to reveal that it was 6.2 %. The hamburgers were grouped for every two pieces, and treated as follows.

Treatment-(C) group:

The whole surfaces of the hamburgers were lightly sprinkled with the powder of Sample (C), and the resulting hamburgers were left to stand for about 30 minutes until the powder of the surfaces had melted.

Treatment-(E) group:

Each hamburger was quickly passed under the solution of Sample (E), and then drained on a net.

Treatment-(G) group: Control.

The hamburgers of the above three groups were fried for 2 minutes for each side on a frying pan on which soybean pure oil was sufficiently put. In the course of pan-frying, hamburgers were synchronously turned over twice. After the hamburgers were left to cool, the oil content in each hamburger was determined by the Soxhlet extraction method to obtain the results as shown in Table 3.

The hamburgers of each group prepared in entirely the same manner were organoleptically blank-tested by five panelists to reveal that no foreign feeling was recognized at all in appearance, taste, smell and texture.

Example 4 Preparation examples of low-oil fried green-pea sprouts:

Green-pea sprouts on the market were purchased, and divided into two groups in an amount of 100 g each. One of the groups were treated as follows:

Treatment-(B) group:

100 g of green-pea sprouts were quickly passed under the solution of Sample (B), and then drained on a net.

Treatment-(G) group: Control.

Lard was sufficiently put on a frying pan and heated. Thereafter, the green-pea sprouts of each group were pan-fried for 2 minutes with stirring. After oil was dripped off, each group was instantaneously dipped in a detergent solution for food so that the lard adhered on the outside was removed as far as possible. Thereafter, the fried green-pea sprouts were passed under water, and then drained. The quantity of the lard was then measured by the Soxhlet extraction method to obtain the results as shown in Table 4.

The green-pea sprouts prepared in entirely the same manner were organoleptically blank-tested by five panelists to reveal that no foreign feeling was recognized at all in appearance, taste, smell and texture.

Table 1 (Example 1)

| Treatment group: | (A) | | (B) | | (C) | | (D) | | (E) | | (F) | | (G) | |
|---|---|---|---|---|---|---|---|---|---|---|---|---|---|---|
| Individual doughnut: | 1 | 2 | 1 | 2 | 1 | 2 | 1 | 2 | 1 | 2 | 1 | 2 | 1 | 2 |
| Weight of base material (g): | 40 | 40 | 40 | 40 | 40 | 40 | 40 | 40 | 40 | 40 | 40 | 40 | 40 | 40 |
| Weight after deep-frying (g): | 45.0 | 44.8 | 44.0 | 43.6 | 43.8 | 43.8 | 45.1 | 45.0 | 43.0 | 43.2 | 44.1 | 44.1 | 47.4 | 47.3 |
| Oil content (g): | 7.0 | 7.2 | 6.0 | 6.4 | 5.9 | 6.0 | 7.4 | 7.2 | 5.8 | 5.7 | 6.2 | 6.3 | 9.5 | 9.2 |
| Oil content in starting material (g): | 1.1 | 1.1 | 1.1 | 1.1 | 1.1 | 1.1 | 1.1 | 1.1 | 1.1 | 1.1 | 1.1 | 1.1 | 1.1 | 1.1 |
| Oil absorption (%): | 13.1 | 13.6 | 11.1 | 12.1 | 10.9 | 11.1 | 13.9 | 13.5 | 10.9 | 10.6 | 11.5 | 11.7 | 17.7 | 17.1 |

Table 2 (Example 2)

| Treatment group: | (C) | | | (E) | | | (G) | | |
|---|---|---|---|---|---|---|---|---|---|
| Individual prawn: | 1 | 2 | 3 | 1 | 2 | 3 | 1 | 2 | 3 |
| Weight of raw prawn (g): | 20.9 | 21.1 | 20.6 | 20.5 | 21.0 | 20.8 | 21.4 | 22.2 | 20.6 |
| Weight of fried prawn (g): | 21.5 | 21.8 | 21.2 | 21.0 | 21.7 | 21.1 | 22.6 | 23.6 | 21.9 |
| Oil content (g): | 1.6 | 1.7 | 1.6 | 1.4 | 1.4 | 1.4 | 2.4 | 2.5 | 2.2 |
| Oil content in starting material (g): | 0.1 | 0.1 | 0.1 | 0.1 | 0.1 | 0.1 | 0.1 | 0.1 | 0.1 |
| Oil absorption (%): | 6.9 | 7.3 | 7.0 | 6.1 | 5.9 | 6.1 | 10.1 | 10.1 | 9.5 |

The oil content in the starting material was determined on 10 prawns.
Results were all 0.1 when calculated to one decimal.

8

EP 0 445 369 B1

## Table 3 (Example 3)

| Treatment group: | (C) | | (E) | | (G) | |
|---|---|---|---|---|---|---|
| Individual hamburger: | 1 | 2 | 1 | 2 | 1 | 2 |
| Weight of base material (g): | 50 | 50 | 50 | 50 | 50 | 50 |
| Weight after pan-frying (g): | 36.8 | 36.5 | 35.6 | 35.4 | 34.7 | 34.8 |
| Oil content (g): | 5.7 | 5.7 | 5.4 | 5.2 | 7.0 | 7.2 |
| Oil content in starting material (g): | 3.1 | 3.1 | 3.1 | 3.1 | 3.1 | 3.1 |
| Oil absorption (%): | 7.0 | 7.1 | 6.4 | 5.9 | 11.2 | 11.7 |

## Table 4 (Example 4)

| Treatment group: | (B) | (G) |
|---|---|---|
| Weight of raw sprouts (g): | 100 | 100 |
| Weight after draining (g): | 60.6 | 65.1 |
| Oil content (g): | 2.4 | 3.5 |
| Oil content in starting material (g): | 0.1 | 0.1 |
| Oil absorption (%): | 3.7 | 5.2 |

## Claims

1. Use of an actomyosin gel obtained by dissolving in a salt solution an actomyosin protein of animal muscle, or of a powdered actomyosin obtained by forming said actomyosin gel into dry powder as an oil absorption reducing material for food cooked with fats and oils.

2. Use according to claim 1, wherein said actomyosin gel is obtained by dissolving in an aqueous sodium chloride solution or potassium chloride solution an actomyosin protein of meat or fish.

3. Use according to claim 1, wherein said powdered actomyosin is obtained by powdering an actomyosin gel obtained by dissolving in an aqueous sodium chloride solution or potassium chloride solution an actomyosin protein of meat or fish.

4. A method for reducing oil absorption in food cooked with fats and oils, comprising applying to the surface of food to be cooked with fats and oils an actomyosin powder or an aqueous solution of the powder which is obtained by dissolving in a salt solution an actomyosin protein of animal muscle and by further drying the thus obtained actomyosin gel into a powder.

5. A method of reducing oil absorption in food cooked with fats and oils according to claim 4, wherein said actomyosin powder is mixed in coating for the food to be cooked with fats and oils.

6. A method of reducing oil absorption in food cooked with fats and oils according to claim 4, wherein said food cooked with fats and oils is deep-fried food, pan-fried food or baked food.

## Patentansprüche

1. Verwendung eines Actomyosingels, erhalten durch Auflösen eines Actomyosinproteins aus Tiermuskel in einer Salzlösung, oder eines gepulverten Actomyosins, erhalten durch Überführen des Actomyosingels in ein trockenes Pulver, als Material zur Verminderung der Ölaufnahme von Nahrungsmitteln, die mit Fetten und Ölen zubereitet werden.

2. Verwendung nach Anspruch 1, dadurch **gekennzeichnet**, daß das Actomyosingel durch Auflösen eines Actomyosinproteins aus Fleisch oder Fisch in einer wäßrigen Natriumchloridlösung oder Kaliumchloridlösung erhalten worden ist.

3. Verwendung nach Anspruch 1, dadurch **gekennzeichnet**, daß das gepulverte Actomyosin durch Pulverisieren eines Actomyosingels, erhalten durch Auflösen eines Actomyosinproteins aus Fleisch oder Fisch in einer wäßrigen Natriumchloridlösung oder Kaliumchloridlösung, erhalten worden ist.

4. Verfahren zur Verminderung der Ölaufnahme von Nahrungsmitteln, zubereitet mit Fetten und Ölen, dadurch **gekennzeichnet**, daß man auf die Oberfläche der Nahrungsmittel, die mit Fetten und Ölen zubereitet werden sollen, ein Actomyosinpulver oder eine wäßrige Lösung des Pulvers, das durch Auflösen eines Actomyosinproteins aus Tiermuskel in einer Salzlösung und weiterhin durch Trocknen des so erhaltenen Actomyosingels zu einem Pulver erhalten worden ist, aufbringt.

5. Verfahren zur Verminderung der Ölaufnahme von Nahrungsmitteln, zubereitet mit Fetten und Ölen, nach Anspruch 4, dadurch **gekennzeichnet**, daß das Actomyosinpulver in einen Überzug für die Nahrungsmittel, die mit Fetten und Ölen zubereitet werden sollen, gemischt wird.

6. Verfahren zur Verminderung der Ölaufnahme von Nahrungsmitteln, zubereitet mit Fetten und Ölen, nach Anspruch 4, dadurch **gekennzeichnet**, daß die Nahrungsmittel, zubereitet mit Fetten und Ölen, frittierte Nahrungsmittel, in der Pfanne gebratene Nahrungsmittel oder gebackene Nahrungsmittel sind.

## Revendications

1. Utilisation d'un gel d'actomyosine obtenu par dissolution dans une solution saline d'une protéine, l'actomyosine, de muscle animal, ou d'une actomyosine en poudre obtenue par mise de ce gel d'actomyosine sous forme de poudre sèche comme matière réduisant l'absorption d'huile pour les aliments cuits avec des graisses et des huiles.

2. Utilisation suivant la revendication 1, dans laquelle ce gel d'actomyosine est obtenu par dissolution dans une solution aqueuse de chlorure de sodium ou de chlorure de potassium d'une protéine, l'actomyosine, de viande ou de poisson.

3. Utilisation suivant la revendication 1, dans laquelle cette actomyosine en poudre est obtenue par pulvérisation d'un gel d'actomyosine obtenu par dissolution dans une solution aqueuse de chlorure de sodium ou de chlorure de potassium d'une protéine, l'actomyosine, de viande ou de poisson.

4. Procédé pour réduire l'absorption d'huile dans les aliments cuits avec des graisses et des huiles, comprenant l'application sur la surface de l'aliment devant être cuit avec des graisses et des huiles d'une poudre d'actomyosine ou d'une solution aqueuse de la poudre qui est obtenue par dissolution dans une solution saline d'une protéine, l'actomyosine, de muscle animal, puis séchage du gel d'actomyosine obtenu en une poudre.

5. Procédé pour réduire l'absorption d'huile dans les aliments cuits avec des graisses et des huiles suivant la revendication 4, dans lequel cette poudre d'actomyosine est mélangée à la pâte à beignets utilisée pour l'aliment devant être cuit avec des graisses et des huiles.

6. Procédé pour réduire l'absorption d'huile dans les aliments cuits avec des graisses et des huiles suivant la revendication 4, dans lequel ce aliment devant être cuit avec des graisses et des huiles est un aliment lyophilisé, un aliment frit ou un aliment cuit.